# EUROPEAN PATENT APPLICATION

(11) **EP 4 503 670 A1**
(43) Date of publication of application: **05.02.2025**
(21) Application number: 22934274.6
(22) Date of filing: 31.03.2022
(51) Int. Cl.: H04W 4/40

(54) **CHANNEL STATE INFORMATION (CSI) REPORT ACQUISITION METHOD AND APPARATUS, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/084658
(87) International publication number: WO 2023/184437

(57) **Abstract**

A CSI report acquisition method and apparatus, and a storage medium, which can be applied to Internet of Vehicles, V2X, V2V and other systems. The method is performed by a first terminal and comprises: receiving a CSI report request sent by a second terminal based on a unicast connection; receiving configuration information sent by the second terminal; determining a target frequency band in a plurality of frequency bands; and sending a CSI report of the target frequency band to the second terminal. Thus, a first terminal and a second terminal in a unicast connection can support sending and receiving of CSI reports of a plurality of frequency bands, thereby improving the performance of a communication system.

## Description

### FIELD

The present invention relates to the technical field of communication, and particularly to a method and apparatus for acquiring a channel state information (CSI) report, and a storage medium.

### BACKGROUND

In order to support direct communication between terminals, the sidelink communication mode has been introduced, and terminals can communicate with each other using sidelink through a PCS interface. The sidelink supports multiple transmission modes such as unicast, multicast, and broadcast.

In the related art, transmission and reception of information between the terminals are only supported on one frequency band, such as the transmission and reception of the channel state information (CSI) report of the sidelink, but the transmission and reception of CSI reports of multiple frequency bands are not supported, which is a problem that needs to be solved urgently.

### SUMMARY

Embodiments of the present invention provide a method and apparatus for acquiring a channel state information (CSI) report, and a storage medium, which may be applied to Internet of Vehicles, such as vehicle-to-anything (V2X) communication, long term evolution-vehicle (LTE-V) communication, vehicle to vehicle (V2V) communication, etc., or may be used in the fields of intelligent driving, intelligent networking vehicle, etc., and allow a first terminal and a second terminal in a unicast connection to support the transmission and reception of CSI reports of multiple frequency bands, and improve the performance of a communication system.

In a first aspect, an embodiment of the present invention provides a method for acquiring a CSI report. The method is performed by a first terminal, and the method includes: receiving a CSI report request sent by a second terminal based on a unicast connection; receiving configuration information sent by the second terminal; determining a target frequency band in a plurality of frequency bands; and sending a CSI report of the target frequency band to the second terminal.

In this technical solution, the first terminal receives the CSI report request sent by the second terminal based on the unicast connection, receives the configuration information sent by the second terminal, determines the target frequency band, and sends the CSI report of the target frequency band to the second terminal. In this way, the first terminal and the second terminal in the unicast connection can support the transmission and reception of the CSI reports of a plurality of frequency bands, thereby improving the performance of a communication system.

In a second aspect, an embodiment of the present invention provides another method for acquiring a CSI report. The method is performed by a second terminal and includes: sending a CSI report request to a first terminal based on a unicast connection; sending configuration information to the second terminal; and receiving a CSI report of a target frequency band sent by the second terminal. The target frequency band is determined by the second terminal from a plurality of frequency bands.

In a third aspect, an embodiment of the present invention provides a communication apparatus, which has some or all the functions of the first terminal for implementing the method of the first aspect described above. For example, the communication apparatus may have functions as described in some or all the embodiments of the present invention, or may also have functions to separately implement any of embodiments of the present invention. The functions may be implemented by hardware, or may be implemented by software executed on corresponding hardware. The hardware or the software includes one or more units or modules corresponding to the above functions.

In an implementation, the communication apparatus may include in its structure a transceiving module and a processing module, and the processing module is configured to support the communication apparatus to perform the corresponding functions of the method described above. The transceiving module is configured to support communication between the communication apparatus and other equipment. The communication apparatus may further include a storage module, which configured to: couple with the transceiving module and the processing module, and store computer programs and data necessary for the communication apparatus.

As an example, the processing module may be a processor, the transceiving module may be a transceiver or a communication interface, and the storage module may be a memory.

In an implementation, the communication apparatus includes: a receiving module configured to receive a CSI report request sent by a second terminal based on a unicast connection and receive configuration information sent by the second terminal; a processing module configured to determine a target frequency band in a plurality of frequency bands; and a sending module configured to send a CSI report of the target frequency band to the second terminal.

In a fourth aspect, an embodiment of the present invention provides a communication apparatus, which has some or all the functions of the second terminal for implementing the method of the second aspect described above. For example, the communication apparatus may have functions as described in some or all the embodiments of the present invention, or may also have functions to separately implement any of embodiments of the present invention. The functions may be implemented by hardware, or may be implemented by software executed on corresponding hardware. The hardware or the software includes one or more units or modules corresponding to the above functions.

In an implementation, the communication apparatus may include in its structure a transceiving module and a processing module, and the processing module is configured to support the communication apparatus to perform the corresponding functions of the method described above. The transceiving module is configured to support communication between the communication apparatus and other equipment. The communication apparatus may further include a storage module, which is configured to: couple with the transceiving module and the processing module, and store computer programs and data necessary for the communication apparatus.

In an implementation, the communication apparatus includes: a sending module configured to send a CSI report request to a first terminal based on a unicast connection and send configuration information to the second terminal; a receiving module configured to receive a CSI report of a target frequency band sent by the second terminal. The target frequency band is determined by the second terminal from a plurality of frequency bands.

In a fifth aspect, an embodiment of the present invention provides a communication apparatus. The communication apparatus includes a processor that, when invoking a computer program in a memory, performs the method of the first or second aspect described above.

In a sixth aspect, an embodiment of the present invention provides a communication apparatus, which includes a processor and a memory having a computer program stored therein. The processor executes the computer program stored in the memory to cause the communication apparatus to perform the method of the first or second aspect described above.

In a seventh aspect, an embodiment of the present invention provides a communication apparatus, which includes a processor and an interface circuit, the interface circuit is configured to receive code instructions and transmit the code instructions to the processor, and the processor is configured to execute the code instructions to cause the apparatus to perform the method of the first or second aspect described above.

In an eighth aspect, an embodiment of the present invention provides a computer readable storage medium that stores instructions for use by the first terminal, and the instructions, when executed, cause the first terminal to perform the method of the first or second aspect described above.

In a ninth aspect, the present invention also provides a computer program product including a computer program that, when run on a computer, causes the computer to perform the method of the first or second aspect described above.

In a tenth aspect, the present invention provides a chip system, which includes at least one processor and an interface for supporting a terminal to implement the function involved in the first or second aspect, e.g. to determine or process at least one of the data and information involved in the method described above. In a possible design, the chip system further includes a memory configured to store computer programs and data necessary for the terminal. The chip system may be comprised of chips or may include chips and other discrete devices.

In an eleventh aspect, the present invention provides a computer program that, when run on a computer, causes the computer to perform the method described of the first or second aspect described above.

### BRIEF DESCRIPTION OF THE DRAWINGS

In order to provide a clearer explanation of embodiments of the present invention or the technical solutions in the related art, drawings to be used for the description of embodiments of the present invention or the related art are described below.
FIG. 1 is an architecture diagram of a communication system provided in an embodiment of the present invention;
FIG. 2 is a flowchart of a method for acquiring a CSI report provided in an embodiment of the present invention;
FIG. 3 is a flowchart of another method for acquiring a CSI report provided in an embodiment of the present invention;
FIG. 4 is a flowchart of another method for acquiring a CSI report provided in an embodiment of the present invention;
FIG. 5 is a flowchart of another method for acquiring a CSI report provided in an embodiment of the present invention;
FIG. 6 is a flowchart of another method for acquiring a CSI report provided in an embodiment of the present invention;
FIG. 7 is a flowchart of another method for acquiring a CSI report provided in an embodiment of the present invention;
FIG. 8 is a flowchart of another method for acquiring a CSI report provided in an embodiment of the present invention;
FIG. 9 is a flowchart of another method for acquiring a CSI report provided in an embodiment of the present invention;
FIG. 10 is a structural diagram of a communication apparatus provided in an embodiment of the present invention;
FIG. 11 is a structural diagram of a communication apparatus provided in an embodiment of the present invention; and
FIG. 12 is a structural diagram of a chip provided in an embodiment of the present invention.

### DETAILED DESCRIPTION

To facilitate understanding, the terminology referred to in the present invention is first introduced.

### 1. Vehicle-to-everything (V2X) communication

V2X communication refers to the communication of a vehicle with anything outside the vehicle. V2X communication may include, but not limited to, vehicle to vehicle (V2V) communication, vehicle to pedestrian (V2P) communication, vehicle to infrastructure (V2I) communication, or vehicle to network (V2N) communication.

In order to better understand a method and apparatus for acquiring a CSI report, and a storage medium disclosed in embodiments of the present invention, a communication system to which embodiments of the present invention are applicable will be described first.

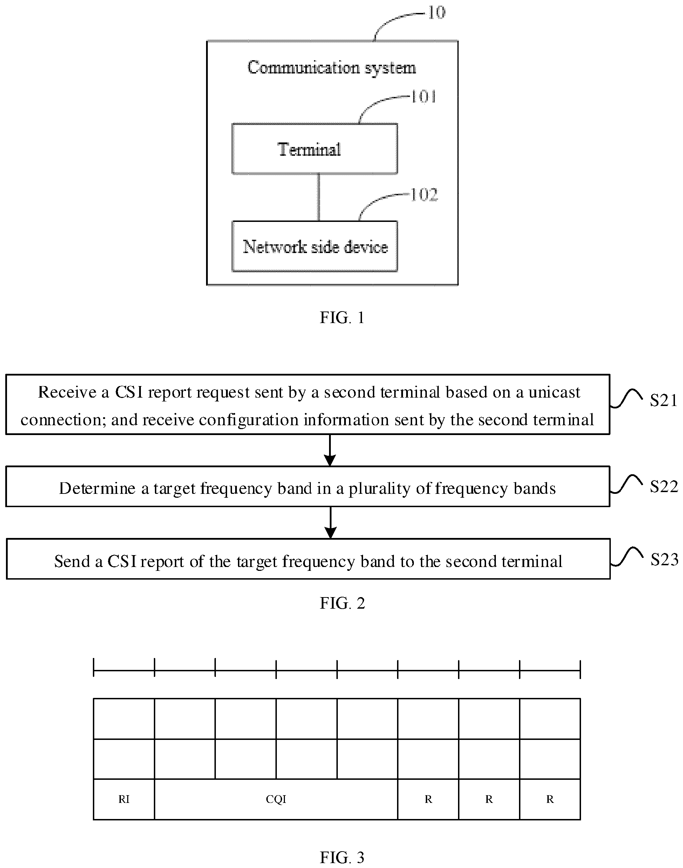

Reference is made to FIG. 1, FIG. 1 is an architecture diagram of a communication system 10 provided in an embodiment of the present invention. The communication system 10 may include, but not limited to, one network-side device and one terminal. The number and form of devices shown in FIG. 1 are merely for example and do not constitute a limitation of the embodiments of the present invention. In practical applications, two or more network-side device and two or more terminals may be included. As an example, the communication system 10 as shown in FIG. 1 includes a network-side device 101 and a terminal 102.

It should be noted that the technical solutions of the embodiments of the present invention can be applied to various communication systems. For example: a long term evolution (LTE) system, a 5th generation (5G) mobile communication system, a 5G new radio (NR) system, or other future new mobile communication systems, etc. It should also be noted that the sidelink in embodiments of the present invention may also be referred to as a side link, a direct link, a direct communications link, etc.

The network side device 101 in an embodiment of the present invention is an entity at the network side for transmitting or receiving signals. For example, the network-side device 101 may be an evolved NodeB (eNB), a transmission reception point (TRP), a next generation NodeB (gNB) in an NR system, a base station in other future mobile communication systems, or an access node in a wireless fidelity (WiFi) system, etc. The embodiments of the present invention do not limit the specific techniques and specific equipment forms used for the network side device. The network-side device provided by the embodiments of the present invention may be composed of a central unit (CU) and distributed units (DUs), and the CU may also be referred to as a control unit. The protocol layers of the network-side device, such as a base station, may be split using a CU-DU structure. The functions of some protocol layers are placed in the CU for centralized control, and the functions of some or all of the remaining protocol layers are distributed in the DUs for centralized control by the CU.

The terminal 102 in an embodiment of the present invention is an entity on the user side such as a cell phone for receiving or transmitting signals. A terminal may also be referred to as a terminal, a user equipment (UE), a mobile station (MS), a mobile terminal (MT), etc. The terminal may be an automobile with a communication function, a smart automobile, a mobile phone, wearable equipment, a Pad, a computer with a wireless transceiving function, a virtual reality (VR) terminal, an augmented reality (AR) terminal, a wireless terminal in industrial control (industrial control), a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present invention do not limit the specific techniques and specific equipment forms used for the terminal.

It can be understood that the communication system described in an embodiment of the present invention is for the purpose of describing the technical solutions of the embodiments of the present invention more clearly and does not constitute a limitation on the technical solutions provided by the embodiments of the present invention, and it can be seen by a person of ordinary skill in the art that the technical solutions provided by the embodiments of the present invention are also applicable to similar technical problems as the system architecture evolves and new service scenarios appear.

The method and apparatus for acquiring a CSI report, and a storage medium provided in the present invention will be described in detail with reference to the accompanying drawings.

Reference is made to FIG. 2, which is a flowchart of a method for acquiring a CSI report provided in an embodiment of the present invention.

As shown in FIG. 2, an embodiment of the present invention provides a method for acquiring a CSI report. The method is performed by a first terminal, and the method may include, but not limited to, the following steps.

In S21, a CSI report request sent by a second terminal based on a unicast connection is received; and configuration information sent by the second terminal is received.

It should be noted that in an embodiment of the present invention, the first terminal establishes a unicast connection with the second terminal, and the second terminal sends sidelink control information (SCI) on a physical sidelink control channel (PSCCH), and the sidelink control information carries resource locations for data transmission, a source terminal identification, and a target terminal identification, etc. The first terminal establishes a unicast connection with the second terminal; and the source terminal identification and the target terminal identification respectively correspond to the first terminal and the second terminal, so that after receiving the SCI, the first terminal determines to receive corresponding data and which process to correspond to according to the source terminal identification and the target terminal identification. In the unicast connection, each terminal corresponds to a destination identification.

Of course, the above-mentioned unicast connection manner between the first terminal and the second terminal is merely illustrative, and the unicast connection manner between the first terminal and the second terminal may also be other manner in the related art, which is not specifically limited in embodiments of the present invention.

In an embodiment of the present invention, the first terminal receives the SCI sent by the second terminal, and the SCI carries the CSI report request. After receiving the CSI report request, the first terminal measures the radio channel quality of the sidelink communication with the second terminal. In the case where the sidelink communication is performed between the first terminal and the second terminal via only one frequency band, after receiving the CSI report request sent by the second terminal, the first terminal will measure a signal on the frequency band.

In S22, a target frequency band in a plurality of frequency bands is determined.

It can be appreciated that in the case where the sidelink communication between the first terminal and the second terminal may be performed via multiple frequency bands, the first terminal receives the CSI report request sent by the second terminal and cannot determine to measure the channel quality of which frequency band.

Based on this, in an embodiment of the present invention, the CSI report request sent by the second terminal indicates information of the target frequency band in the plurality of frequency bands, so that the first terminal receives the CSI report request sent by the second terminal, and may determine the target frequency band according to the information of the target frequency band in the plurality of frequency bands indicated by the CSI report request.

Alternatively, in an embodiment of the present invention, the second terminal sends the configuration information to the first terminal, the configuration information indicates information of the target frequency band in the plurality of frequency bands, and the first terminal receives the configuration information sent by the second terminal, and may determine the target frequency band according to the information of the target frequency band in the plurality of frequency bands indicated by the configuration information.

Alternatively, in an embodiment of the present invention, the second terminal sends the configuration information to the first terminal, the CSI report request and the configuration information indicate information of the target frequency band in the plurality of frequency bands, and the first terminal receives the CSI report request and the configuration information sent by the second terminal and may determine the target frequency band according to the information of the target frequency band in the plurality of frequency bands indicated by the CSI report request and the configuration information.

In an embodiment of the present invention, the target frequency band may be one or more specific frequency points (carriers) or specific frequency bandwidth parts.

In S23, a CSI report of the target frequency band is sent to the second terminal.

In an embodiment of the present invention, after determining the target frequency band, the first terminal measures the radio channel quality of the target frequency band, and generates the CSI report of the target frequency band, and then sends the CSI report of the target frequency band to the second terminal.

In some embodiments, the CSI report indicates a channel quality indicator (CQI) of the target frequency band, and a frequency band identification; and the frequency band identification is used to determine the target frequency band corresponding to the CSI report.

In an embodiment of the present invention, the CSI report of the target frequency band sent by the first terminal to the second terminal indicates the CQI of the target frequency band and the frequency band identification, and the frequency band identification is used to determine the target frequency band corresponding to the CSI report, so that the second terminal may determine the CSI report of the target frequency band and the CQI of the target frequency band after receiving the CSI report.

In some embodiments, in the case where the configuration information includes a list of frequency bands, and the list of frequency bands includes at least one frequency band, the frequency band identification is a second index identification, the second index identification indicates a second position in the list of frequency bands, and a fifth frequency band located at the second position in the list of frequency bands indicated by the second index identification is the target frequency band corresponding to the CSI report.

In an embodiment of the present invention, the configuration information sent by the second terminal includes the list of frequency bands, the list of frequency bands includes at least one frequency band. The frequency band identification indicated by the CSI report may be the second index identification, and the second index identification indicates the second position in the list of frequency bands, so the first terminal may determine the target frequency band according to the second position in the list of frequency bands indicated by the second index identification and the list of frequency bands. In the case where the frequency band at the second position in the list of frequency bands indicated by the second index identification is the fifth frequency band, it can be determined that the CSI report of the fifth frequency band is received.

To facilitate understanding, an embodiment of the present invention provides an example.

As shown in Table 1 below:

**Table 1**

| No. | Frequency band |
|---|---|
| 1 | 5 GHz |
| 2 | 5.1 GHz |
| 3 | 6 GHz |

The configuration information sent by the second terminal includes the list of frequency bands, the frequency band identification indicated by the CSI report includes the second index identifications 1 and 2, and the second index identifications 1 and 2 respectively indicate that the second positions in the list of frequency bands are No. 1 and No. 2, so that the first terminal may determine that the fifth frequency bands are 5 GHz and 5.1 GHz according to the second positions in the list of frequency bands indicated by the second index identifications and the list of frequency bands, and determine that the target frequency bands are the fifth frequency bands of 5 GHz and 5.1 GHz, and accordingly, the second terminal may determine a target frequency point corresponding to the CSI report according to the received CSI report sent by the first terminal.

It should be noted that the above-mentioned examples are merely illustrative, and the list of frequency bands and the second index identification may also have other formats. For example, other parts may also be included in the list of frequency bands, or the list of frequency bands may not include a number column or the like, or the second index identification may also be in the form of a list, which is not specifically limited in embodiments of the present invention.

In some embodiments, the CSI report has a sidelink channel state information reporting medium access control control element (sidelink CSI reporting MAC CE) structure, and the sidelink CSI reporting MAC CE structure includes a reserved bit for carrying the frequency band identification.

In an embodiment of the present invention, the CSI report has the sidelink CSI reporting MAC CE (medium access control control element) structure.

For example, as shown in FIG. 3, the structure of the CSI report includes: an RI denoting a sidelink CSI report rank indicator, a CQI denoting a channel quality indicator, and an R denoting a reserved bit.

In an embodiment of the present invention, the frequency band identification is carried by the reserved bit.

In some embodiments, the sidelink CSI reporting MAC CE structure includes a plurality of portions, which correspond to a plurality of target frequency bands, respectively.

In an embodiment of the present invention, as shown in FIG. 3, in the case where the target frequency band includes a plurality of frequency bands, for the CSI report sent by the first terminal to the second terminal, the structure of the CSI report, i.e., the sidelink CSI reporting MAC CE structure, includes a plurality of portions, for example, a plurality of rows with each row corresponding to one frequency band in the target frequency bands.

In technical solutions of the present invention, the first terminal receives the CSI report request sent by the second terminal based on the unicast connection, receives the configuration information sent by the second terminal, determines the target frequency band, and sends the CSI report of the target frequency band to the second terminal. In this way, the first terminal and the second terminal in the unicast connection can support the transmission and reception of the CSI reports of a plurality of frequency bands, thereby improving the performance of a communication system.

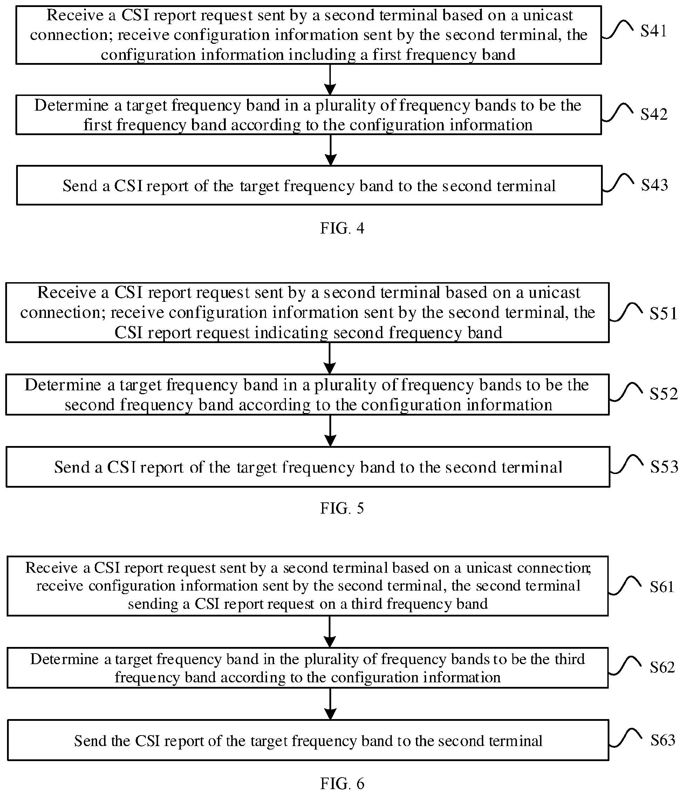

Reference is made to FIG. 4, which is a flowchart of a method for acquiring a CSI report provided in an embodiment of the present invention.

As shown in FIG. 4, an embodiment of the present invention provides a method for acquiring a CSI report. The method is performed by a first terminal, and the method may include, but not limited to, the following steps.

In S41, a CSI report request sent by a second terminal based on a unicast connection is received, configuration information sent by the second terminal is received, and the configuration information includes a first frequency band.

In an embodiment of the present invention, the first terminal receives the configuration information sent by the second terminal, and the configuration information includes a first frequency band. In an embodiment of the present invention, the first frequency band may be one or more specific frequency points (carriers) or specific frequency bandwidth parts.

It should be noted that for the relevant description of S41 in embodiments of the present invention, reference may be made to the relevant description of the above embodiments, and the same description will not be repeated here.

In S42, it is determined according to the configuration information that a target frequency band in a plurality of frequency bands is the first frequency band.

In S43, a CSI report of the target frequency band is sent to the second terminal.

In an embodiment of the present invention, after determining the target frequency band according to the CSI report request sent by the second terminal and according to the configuration information sent by the second terminal, the first terminal measures the radio channel quality of the target frequency band and generates the CSI report of the target frequency band, and then may send the CSI report of the target frequency band to the second terminal.

In this technical solution, the first terminal receives the CSI report request sent by the second terminal based on the unicast connection, receives the configuration information including the first frequency band sent by the second terminal, determines the target frequency band to be the first frequency band according to the configuration information, and sends the CSI report of the target frequency band to the second terminal. In this way, the first terminal and the second terminal in the unicast connection can support the transmission and reception of the CSI reports of a plurality of frequency bands, thereby improving the performance of a communication system.

Reference is made to FIG. 5, which is a flowchart of another method for acquiring a CSI report provided in an embodiment of the present invention.

As shown in FIG. 5, an embodiment of the present invention provides a method for acquiring a CSI report. The method is performed by a first terminal, and the method may include, but not limited to, the following steps.

In S51, a CSI report request sent by a second terminal based on a unicast connection is received; configuration information sent by the second terminal is received, and the CSI report request indicates a second frequency band.

In an embodiment of the present invention, the first terminal receives the CSI report request sent by the second terminal, the CSI report request includes a second frequency band. In an embodiment of the present invention, the second frequency band may be one or more specific frequency points (carriers) or specific frequency bandwidth parts.

It should be noted that for the relevant description of S51 in embodiments of the present invention, reference may be made to the relevant description of the above embodiments, and the same description will not be repeated here.

In S52, it is determined according to the CSI report request that a target frequency band in a plurality of frequency bands is the second frequency band.

In S53, a CSI report of the target frequency band is sent to the second terminal.

In an embodiment of the present invention, after determining the target frequency band according to the CSI report request sent by the second terminal and according to the CSI report request sent by the second terminal, the first terminal measures the radio channel quality of the target frequency band and generates the CSI report of the target frequency band, and then may send the CSI report of the target frequency band to the second terminal.

In this technical solution, the first terminal receives the CSI report request indicating the second frequency band sent by the second terminal based on the unicast connection, determines the target frequency band to be the second frequency band according to the CSI report request, and sends the CSI report of the target frequency band to the second terminal. In this way, the first terminal and the second terminal in the unicast connection can support the transmission and reception of the CSI reports of a plurality of frequency bands, thereby improving the performance of a communication system.

Reference is made to FIG. 6, which is a flowchart of another method for acquiring a CSI report provided in an embodiment of the present invention.

As shown in FIG. 6, an embodiment of the present invention provides a method for acquiring a CSI report. The method is performed by a first terminal, and the method may include, but not limited to, the following steps.

In S61, a CSI report request sent by a second terminal based on a unicast connection is received; configuration information sent by a second terminal is received; and the second terminal sends the CSI report request on a third frequency band.

In an embodiment of the present invention, the first terminal receives the CSI report request sent by the second terminal, and the second terminal sends the CSI report request on the third frequency band. In an embodiment of the present invention, the third frequency band may be one or more specific frequency points (carriers) or specific frequency bandwidth parts.

It should be noted that for the relevant description of S61 in embodiments of the present invention, reference may be made to the relevant description of the above embodiments, and the same description will not be repeated here.

In S62, it is determined according to the CSI report request that a target frequency band in a plurality of frequency bands is the third frequency band.

In S63, a CSI report of the target frequency band is sent to the second terminal.

In an embodiment of the present invention, after determining the target frequency band according to the CSI report request sent by the second terminal and according to the CSI report request sent by the second terminal, the first terminal measures the radio channel quality of the target frequency band and generates the CSI report of the target frequency band, and then may send the CSI report of the target frequency band to the second terminal.

In this technical solution, the first terminal receives the CSI report request sent by the second terminal based on the unicast connection, the CSI report request is sent by the second terminal on the third frequency band, the first terminal determines the target frequency band to be the third frequency band according to the CSI report request, and sends the CSI report of the target frequency band to the second terminal. In this way, the first terminal and the second terminal in the unicast connection can support the transmission and reception of the CSI reports of a plurality of frequency bands, thereby improving the performance of a communication system.

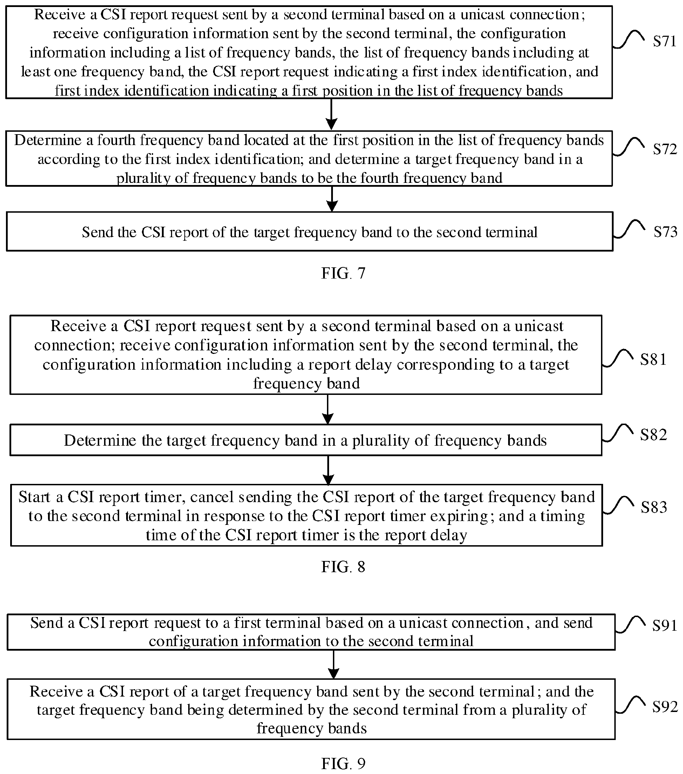

Reference is made to FIG. 7, which is a flowchart of another method for acquiring a CSI report provided in an embodiment of the present invention.

As shown in FIG. 7, an embodiment of the present invention provides a method for acquiring a CSI report. The method is performed by a first terminal, and the method may include, but not limited to, the following steps.

In S71, a CSI report request sent by a second terminal based on a unicast connection is received, configuration information sent by the second terminal is received, the configuration information includes a list of frequency bands, the list of frequency bands includes at least one frequency band, the CSI report request indicates a first index identification, and the first index identification indicates a first position in the list of frequency bands.

Here, for the relevant description of S71 in embodiments of the present invention, reference may be made to the relevant description of the above embodiments, and the same description will not be repeated here.

In an embodiment of the present invention, the first terminal receives the CSI report request and the configuration information sent by the second terminal, the configuration information includes the list of frequency bands, the list of frequency bands includes at least one frequency band, the CSI report request indicates the first index identification, and the first index identification indicates the first position in the list of frequency bands. In an embodiment of the present invention, the frequency band included in the list of frequency bands may be one or more specific frequency points (carriers) or specific frequency bandwidth parts.

For example, the first terminal sends the configuration information to the second terminal based on the unicast connection, and the configuration information includes the list of frequency bands, as shown in Table 1 above.

In an embodiment of the present invention, the first terminal receives the CSI report request and the configuration information sent by the second terminal. The configuration information includes the list of frequency bands, as shown in Table 1 above, the list of frequency bands includes at least one frequency band, and the CSI report request indicates the first index identification. For example, the first index identification indicates that the first position in the list of frequency bands includes 1 and 3.

In S72, a fourth frequency band located at the first position in the list of frequency bands is determined according to the first index identification; and a target frequency band in a plurality of frequency bands is determined to be a fourth frequency band.

In an embodiment of the present invention, the first terminal receives the CSI report request and the configuration information sent by the second terminal. The configuration information includes the list of frequency bands, the list of frequency bands includes at least one frequency band, the CSI report request indicates the first index identification, and the first index identification indicates the first position in the list of frequency bands. Accordingly, the first terminal determines according to the first index identification that the frequency band located at the first specific position in the list of frequency bands is the fourth frequency band, and further determines the target frequency band to be the fourth frequency band.

For example, continuing to refer to the above-mentioned example, the first index identification indicates that the first position in the list of frequency bands includes 1 and 3, so the first terminal may determine according to the first index identification that the fourth frequency band located at positions 1 and 3 in the list of frequency bands includes frequency bands of 5 GHz and 6 GHz, and further determine that the target frequency band includes the frequency bands of 5 GHz and 6 GHz.

It should be noted that the above-mentioned examples are merely illustrative, and the list of frequency bands and the first index identification may also have other formats. For example, other parts may also be included in the list of frequency bands, or the list of frequency bands may not include a number column or the like, or the first index identification may also be in the form of a list, which is not specifically limited in embodiments of the present invention.

In S73, a CSI report of the target frequency band is sent to the second terminal.

In an embodiment of the present invention, after determining the target frequency band according to the CSI report request and the configuration information sent by the second terminal, the first terminal measures the radio channel quality of the target frequency band, generates the CSI report of the target frequency band, and then may send the CSI report of the target frequency band to the second terminal.

In this technical solution, the first terminal receives the CSI report request and the configuration information sent by the second terminal based on the unicast connection, the configuration information includes the list of frequency bands, the list of frequency bands includes at least one frequency band, the CSI report request indicates the first index identification, and the first index identification indicates the first position in the list of frequency bands. According to the CSI report request and the configuration information, the target frequency band is determined to be the fourth frequency band; and the CSI report of the target frequency band is sent to the second terminal. In this way, the first terminal and the second terminal in the unicast connection can support the transmission and reception of the CSI reports of a plurality of frequency bands, thereby improving the performance of a communication system.

Reference is made to FIG. 8, which is a flowchart of another method for acquiring a CSI report provided in an embodiment of the present invention.

As shown in FIG. 8, an embodiment of the present invention provides a method for acquiring a CSI report. The method is performed by a first terminal, and the method may include, but not limited to, the following steps.

In S81, a CSI report request sent by a second terminal based on a unicast connection is received; configuration information sent by the second terminal is received, and the configuration information includes a report delay corresponding to a target frequency band.

In an embodiment of the present invention, the first terminal receives the configuration information sent by the second terminal, the configuration information includes the report delay corresponding to the target frequency band. For example, the configuration information includes a report delay of 5 ms, or 10 ms, etc., or includes a list containing a plurality of frequency bands of the target frequency band and report delays, etc.

In the case where the configuration information includes a report delay of 5 ms, it is determined that the report delay corresponding to the target frequency band is 5 ms, and in the case where the target frequency band includes a plurality of frequency bands, the report delays of the plurality of frequency bands are all 5 ms.

In the case where the configuration information includes the list containing a plurality of frequency bands of the target frequency band and the report delays, the report delay of the target frequency band may be determined according to a corresponding relationship between the frequency bands and the report delays in the list.

### For example, the list is as shown in Table 2 below

**Table 2**

| No. | Frequency band | Report delay |
|---|---|---|
| 1 | 5 GHz | 5 ms |
| 2 | 5.1 GHz | 5 ms |
| 3 | 6 GHz | 10 ms |

It will be appreciated that the configuration information include the report delay corresponding to the target frequency band, which may directly indicate the report delay of the target frequency band, or the configuration information may also include a list as shown in Table 2 above, which includes the report delay of the target frequency band.

In S82, a target frequency band in a plurality of frequency bands is determined.

In an embodiment of the present invention, the first terminal receives the configuration information of the second terminal, and the configuration information includes the report delay corresponding to the target frequency band, so that after determining the target frequency band, the report delay corresponding to the target frequency band may be determined.

It is assumed that it is determined that the target frequency band includes frequency bands of 5 GHz and 5.1 GHz, and the configuration information includes a report delay corresponding to the target frequency band of 10 ms, it may be determined that the report delay corresponding to both target frequency bands of 5 GHz and 5.1 GHz is 10 ms.

It is assumed that it is determined that the target frequency band includes frequency bands of 5 GHz and 6 GHz, and the report delay corresponding to the target frequency band included in the configuration information is a list as shown in the above example, it may be determined that the report delay corresponding to the target frequency band of 5 GHz is 5 ms, and the report delay corresponding to the target frequency band of 6 GHz is 10 ms.

Herein, for the relevant description of S81 and S82 in embodiments of the present invention, reference may be made to the relevant description of the above embodiments, and the same description will not be repeated here.

In S83, a CSI report timer is started, and it is cancelled to send the CSI report of the target frequency band to the second terminal in response to the CSI report timer expiring. A timing time of the CSI report timer is the report delay.

It will be appreciated that the CSI report needs to be sent within the timing time, otherwise, the CSI report will become invalid.

In an embodiment of the present invention, when the first terminal receives the CSI report request sent by the second terminal, the first terminal may start a countdown of the CSI report timer. In the case where the target frequency band includes a plurality of frequency bands, the CSI reports of the plurality of frequency bands need to be sent at the same time, or the CSI reports of different frequency bands may be sent at different time.

In some embodiments, in the case where the CSI report timer does not expire, and the first terminal has completed the measurement of the channel quality of the target frequency band and generated the CSI report, the first terminal sends the CSI report of the target frequency band to the second terminal. The timing time of the CSI report timer is the report delay.

For example, in the case where the report delay of the target frequency is 10 ms, the first terminal has completed the measurement of the channel quality of the target frequency band and generated the CSI report with 2 ms remaining in the countdown of the CSI report timer, the first terminal may send the CSI report of the target frequency band to the second terminal.

In some other embodiments, in the case where the CSI report timer expires, it is cancelled to send the CSI report of the target frequency band to the second terminal.

For example, in the case where the report delay of the target frequency is 10 ms, if the first terminal has not completed the measurement of the channel quality of the target frequency band and not generated the CSI report with 0 ms remaining in the countdown of the CSI report timer, it is cancelled to send the CSI report of the target frequency band to the second terminal.

In some other embodiments, in the case where the generated CSI report corresponding to the target frequency band is sent to the second terminal, and the CSI report timer does not expire, the countdown of the CSI report timer is stopped.

For example, in the case where the report delay of the target frequency band is 10 ms, if the first terminal has completed the measurement of the channel quality of the target frequency band and generated the CSI report, and sent the CSI report of the target frequency band to the second terminal, with 3 ms remaining in the countdown of the CSI report timer, the countdown of the CSI report timer is stopped.

Reference is made to FIG. 9, which is a flowchart of another method for acquiring a CSI report provided in an embodiment of the present invention.

As shown in FIG. 9, an embodiment of the present invention provides a method for acquiring a CSI report. The method is performed by a second terminal, and the method may include, but not limited to, the following steps.

In S91, a CSI report request is sent to a first terminal based on a unicast connection; and configuration information is sent to the second terminal.

It should be noted that in an embodiment of the present invention, the first terminal establishes a unicast connection with the second terminal, and the second terminal sends sidelink control information (SCI) on a physical sidelink control channel (PSCCH), and the sidelink control information carries resource locations for data transmission, a source terminal identification, and a target terminal identification, etc. The first terminal establishes a unicast connection with the second terminal; and the source terminal identification and the target terminal identification respectively correspond to the first terminal and the second terminal, so that after receiving the SCI, the first terminal determines to receive corresponding data and which process to correspond to according to the source terminal identification and the target terminal identification. In the unicast connection, each terminal corresponds to a destination identification.

Of course, the above-mentioned unicast connection manner between the first terminal and the second terminal is merely illustrative, and the unicast connection manner between the first terminal and the second terminal may also be other manner in the related art, which is not specifically limited in embodiments of the present invention.

In an embodiment of the present invention, the first terminal receives the SCI sent by the second terminal, and the SCI carries the CSI report request. After receiving the CSI report request, the first terminal measures the radio channel quality of the sidelink communication with the second terminal. In the case where the sidelink communication is performed between the first terminal and the second terminal via only one frequency band, after receiving the CSI report request sent by the second terminal, the first terminal will measure a signal on the frequency band.

In S92, a CSI report of a target frequency band sent by the second terminal is received; and the target frequency band is determined by the second terminal from a plurality of frequency bands.

It can be appreciated that in the case where the sidelink communication between the first terminal and the second terminal may be performed via multiple frequency bands, the first terminal receives the CSI report request sent by the second terminal and cannot determine to measure the channel quality of which frequency band.

Based on this, in an embodiment of the present invention, the CSI report request sent by the second terminal indicates information of the target frequency band in the plurality of frequency bands, so that the first terminal receives the CSI report request sent by the second terminal, and may determine the target frequency band according to the information of the target frequency band in the plurality of frequency bands indicated by the CSI report request.

Alternatively, in an embodiment of the present invention, the second terminal sends the configuration information to the first terminal, the configuration information indicates information of the target frequency band in the plurality of frequency bands, and the first terminal receives the configuration information sent by the second terminal, and may determine the target frequency band according to the information of the target frequency band in the plurality of frequency bands indicated by the configuration information.

Alternatively, in an embodiment of the present invention, the second terminal sends the configuration information to the first terminal, the CSI report request and the configuration information indicate information of the target frequency band in the plurality of frequency bands, and the first terminal receives the CSI report request and the configuration information sent by the second terminal and may determine the target frequency band according to the information of the target frequency band in the plurality of frequency bands indicated by the CSI report request and the configuration information.

In an embodiment of the present invention, the target frequency band may be one or more specific frequency points (carriers) or specific frequency bandwidth parts.

In some embodiments, the configuration information includes a first frequency band.

In some embodiments, the CSI report request indicates a second frequency band.

In some embodiments, sending the CSI report request to the first terminal based on the unicast connection includes: sending the CSI report request to the first terminal based on the unicast connection on a third frequency band.

In some embodiments, the configuration information includes a list of frequency bands, and the list of frequency bands includes at least one frequency band.

In some embodiments, the configuration information further includes a report delay corresponding to a frequency band in the list of frequency bands.

In some embodiments, the CSI report request indicates a first index identification, and the first index identification indicates a first position in the list of frequency bands.

In an embodiment of the present invention, after determining the target frequency band, the first terminal measures the radio channel quality of the target frequency band, and generates the CSI report of the target frequency band, and then sends the CSI report of the target frequency band to the second terminal.

In some embodiments, the CSI report indicates a channel quality indicator (CQI) of the target frequency band, and a frequency band identification; and the frequency band identification is used to determine the target frequency band corresponding to the CSI report.

In an embodiment of the present invention, the CSI report of the target frequency band sent by the first terminal to the second terminal indicates the CQI of the target frequency band and the frequency band identification, and the frequency band identification is used to determine the target frequency band corresponding to the CSI report, so that the second terminal may determine the CSI report of the target frequency band and the CQI of the target frequency band after receiving the CSI report.

In some embodiments, in the case where the configuration information includes a list of frequency bands, and the list of frequency bands includes at least one frequency band, the frequency band identification is a second index identification, the second index identification indicates a second position in the list of frequency bands, and a fifth frequency band located at the second position in the list of frequency bands indicated by the second index identification is the target frequency band corresponding to the CSI report.

In an embodiment of the present invention, the configuration information sent by the second terminal includes the list of frequency bands, the list of frequency bands includes at least one frequency band. The frequency band identification indicated by the CSI report may be the second index identification, and the second index identification indicates the second position in the list of frequency bands, so the first terminal may determine the target frequency band according to the second position in the list of frequency bands indicated by the second index identification and the list of frequency bands. In the case where the frequency band located at the second position in the list of frequency bands indicated by the second index identification is the fifth frequency band, it can be determined that the CSI report of the fifth frequency band is received.

To facilitate understanding, an embodiment of the present invention provides an example.

As shown in Table 1 above, the configuration information sent by the second terminal includes the list of frequency bands, the frequency band identification indicated by the CSI report includes the second index identifications 1 and 2, and the second index identifications 1 and 2 respectively indicate that the second positions in the list of frequency bands are No. 1 and No. 2, so that the first terminal may determine that the fifth frequency bands are 5 GHz and 5.1 GHz according to the second positions located in the list of frequency bands indicated by the second index identifications and the list of frequency bands, and determine that the target frequency bands are the fifth frequency bands of 5 GHz and 5.1 GHz, and accordingly, the second terminal may determine a target frequency point corresponding to the CSI report according to the received CSI report sent by the first terminal.

In some embodiments, the CSI report has a sidelink channel state information reporting medium access control control element (sidelink CSI reporting MAC CE) structure, and the sidelink CSI reporting MAC CE structure includes a reserved bit for carrying the frequency band identification.

In an embodiment of the present invention, the CSI report has the sidelink CSI reporting MAC CE structure.

For example, as shown in FIG. 3, the structure of the CSI report includes a reserved bit, and in an embodiment of the present invention, the frequency band identification is carried by the reserved bit.

In some embodiments, the sidelink CSI reporting MAC CE structure includes a plurality of portions, which correspond to a plurality of target frequency bands, respectively.

In an embodiment of the present invention, in the case where the target frequency band includes a plurality of frequency bands, for the CSI report sent by the first terminal to the second terminal, the structure of the CSI report, i.e., the sidelink CSI reporting MAC CE structure, includes a plurality of portions, for example, a plurality of rows with each row corresponding to one frequency band in the target frequency bands.

In technical solutions of the present invention, the first terminal receives the CSI report request sent by the second terminal based on the unicast connection, receives the configuration information sent by the second terminal, determines the target frequency band, and sends the CSI report of the target frequency band to the second terminal. In this way, the first terminal and the second terminal in the unicast connection can support the transmission and reception of the CSI reports of a plurality of frequency bands, thereby improving the performance of a communication system.

It should be noted that for the relevant description of S91 and S92 in embodiments of the present invention, reference may be made to the relevant description of the above embodiments, and the same description will not be repeated here.

In embodiments provided by the present invention described above, the methods provided by the embodiments of the present invention are described from the perspective of the first terminal and the second terminal, respectively. In order to implement the functions in the method provided by the above-mentioned embodiments of the present invention, the first terminal and the second terminal may include a hardware structure, a software module, and implement the above-mentioned functions in the form of a hardware structure, a software module, or a hardware structure plus a software module. Some of the functions described above may be performed by a hardware structure, a software module, or a hardware structure plus a software module.

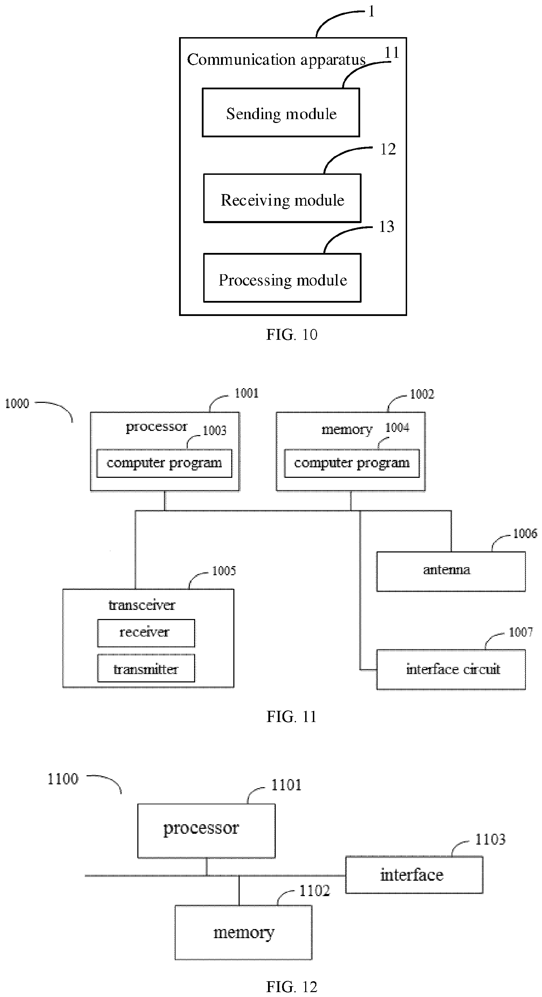

Reference is made to FIG. 10, which is a structural schematic diagram of a communication apparatus 1 provided in an embodiment of the present invention. The communication apparatus 1 shown in FIG. 10 may include a transceiving module and a processing module 13. The transceiving module may include a sending module 11 and/or a receiving module 12. The sending module 11 is configured to realize a sending function, the receiving module 12 is configured to realize a receiving function, and the transceiving module may realize the sending function and/or the receiving function.

The communication apparatus 1 may be the first terminal or the second terminal, may be an apparatus in the first terminal or the second terminal, or may be an apparatus that can be matched for use with the first terminal or the second terminal.

In the case where the communication apparatus 1 is the first terminal, the communication apparatus 1 includes a sending module 11, a receiving module 12, and a processing module 13.

The receiving module 12 is configured to: receive a CSI report request sent by a second terminal based on a unicast connection, and receive configuration information sent by the second terminal.

The processing module 13 is configured to determine a target frequency band of a plurality of frequency bands.

The sending module 11 is configured to send a CSI report of the target frequency band to the second terminal.

In some embodiments, the processing module 13 is specifically configured to determine the target frequency band to be a first frequency band according to the configuration information indicating the first frequency band.

In some embodiments, the processing module 13 is specifically configured to determine the target frequency band to be a second frequency band according to the CSI report request indicating the second frequency band.

In some embodiments, the processing module 13 is specifically configured to determine the target frequency band to be a third frequency band according to the CSI report request; and the second terminal sends the CSI report request on the third frequency band.

In some embodiments, the processing module 13 is specifically configured to: determine a fourth frequency band located at a first position in a list of frequency bands according to a first index identification, and determine the target frequency band to be the fourth frequency band. The configuration information includes the list of frequency bands including at least one frequency band, and the CSI report request indicating the first index identification indicating the first position in the list of frequency bands.

In some embodiments, the processing module 13 is further configured to start a CSI report timer.

In some embodiments, the sending module 11 is further configured to cancel sending the CSI report of the target frequency band to the second terminal in response to the CSI report timer expiring. The configuration information includes a report delay corresponding to a target frequency band; and a timing time of the CSI report timer is the report delay.

In some embodiments, the processing module 13 is further configured to stop the countdown of the CSI report timer in response to sending the generated CSI report corresponding to the target frequency band to the second terminal and the CSI report timer not expiring. The configuration information includes a report delay corresponding to the target frequency band; and a timing time of the CSI report timer is the report delay.

In some embodiments, the CSI report indicates a channel quality indicator (CQI) of the target frequency band, and a frequency band identification. The frequency band identification is used to determine the target frequency band corresponding to the CSI report.

In some embodiments, in the case where the configuration information includes a list of frequency bands including at least one frequency band, the frequency band identification is a second index identification indicating a second position in the list of frequency bands, and a fifth frequency band located at the second position in the list of frequency bands indicated by the second index identification is the target frequency band corresponding to the CSI report.

In some embodiments, the CSI report has a sidelink channel state information reporting medium access control control element (sidelink CSI reporting MAC CE) structure, and the sidelink CSI reporting MAC CE structure includes a reserved bit for carrying the frequency band identification.

In some embodiments, the sidelink CSI reporting MAC CE structure includes a plurality of portions corresponding to a plurality of target frequency bands, respectively.

In the case where the communication apparatus 1 is the second terminal, the communication apparatus 1 includes a sending module 11 and a receiving module 12.

The sending module 11 is configured to send a CSI report request to a first terminal based on a unicast connection and send configuration information to the second terminal.

The receiving module 12 is configured to receive a CSI report of a target frequency band sent by the second terminal. The target frequency band is determined by the second terminal from a plurality of frequency bands.

In some embodiments, the configuration information indicates a first frequency band.

In some embodiments, the CSI report request indicates a second frequency band.

In some embodiments, the sending module 11 is specifically configured to send the CSI report request to the first terminal based on the unicast connection on the third frequency band.

In some embodiments, the configuration information includes a list of frequency bands, and the list of frequency bands includes at least one frequency band.

In some embodiments, the configuration information further includes a report delay corresponding to a frequency band in the list of frequency bands.

In some embodiments, the CSI report request indicates a first index identification, and the first index identification indicates a first position in the list of frequency bands.

In some embodiments, the CSI report indicates a channel quality indicator (CQI) of the target frequency band, and a frequency band identification. The frequency band identification is used to determine the target frequency band corresponding to the CSI report.

In some embodiments, in the case where the configuration information includes a list of frequency bands including at least one frequency band, the frequency band identification is a second index identification, the second index identification indicates a second position in the list of frequency bands, and a fifth frequency band located at the second position in the list of frequency bands indicated by the second index identification is the target frequency band corresponding to the CSI report.

In some embodiments, the CSI report has a sidelink CSI reporting MAC CE structure, and the sidelink CSI reporting MAC CE structure includes a reserved bit for carrying frequency band identification.

In some embodiments, the sidelink CSI reporting MAC CE structure includes a plurality of portions corresponding to a plurality of target frequency bands respectively.

With regard to the communication apparatus 1 in the above-described embodiments, the specific manners in which the respective modules perform operations have been described in detail in connection with the embodiments of the method, and will not be described in detail here.

The communication apparatus 1 provided in the above-described embodiments of the present invention achieves the same or similar advantageous effects as the communication method provided in some of the above-described embodiments, and will not be described in detail herein.

Reference is made to FIG. 11, which is a structural schematic diagram of a communication apparatus 1000 provided in an embodiment of the present invention. The communication apparatus 1000 may be a first terminal, a second terminal, or a chip, a chip system, a processor or the like supporting the terminal to implement the above method. The communication apparatus 1000 may be used to implement the methods described in the above method embodiments, for details, please refer to the description of the method embodiments above.

The communication device 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 1000 may further include one or more memories 1002 that may have stored therein a computer program 1004. The memory 1002 executes the computer program 1004 to cause the communication device 1000 to implement the methods as described in the above method embodiments. Optionally, the memory 1002 may have stored therein data. The communication device 1000 and the memory 1002 may be set separately or integrated together.

Optionally, the communication device 1000 may further include a transceiver 1005 and an antenna 1006. The transceiver 1005 may be called a transceiving element, a transceiving machine, a transceiving circuit or the like, for implementing a transceiving function. The transceiver 1005 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1000 may further include one or more interface circuits 1007. The interface circuit 1007 is configured to receive a code instruction and transmit the code instruction to the processor 1001. The processor 1001 runs the code instruction to enable the communication device 1000 to execute the methods as described in the foregoing method embodiments.

In the case where the communication apparatus 1000 is a first terminal, the transceiver 1005 is configured to perform S21 and S23 in FIG. 2; S41 and S43 in FIG. 4; S51 and S53 in FIG. 5; S61 and S63 in FIG. 6; S71 and S73 in FIG. 7; or S81 and S83 in FIG. 8; and the processor 1001 is configured to execute S22 in FIG. 2; S32 in FIG. 3; S42 in FIG. 4; S52 in FIG. 5; S62 in FIG. 6; S72 in FIG. 7; or S82 in FIG. 8.

In the case where the communication apparatus 1000 is a second terminal, the transceiver 1005 is configured to perform S91 and S92 in FIG. 9.

In an implementation manner, the processor 1001 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 1001 may have stored therein a computer program 1003 that, when run on the processor 1001, causes the communication device 1000 to implement the method as described in the foregoing method embodiments. The computer program 1003 may be solidified in the processor 1001, and in this case, the processor 1001 may be implemented by a hardware.

In an implementation manner, the communication device 1000 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a terminal (such as the first terminal or the second terminal as described in the foregoing method embodiments), but the scope of the communication device described in the present invention is not limited thereto, and a structure of the communication device is not limited by FIG. 11. The communication device may be a stand-alone device or may be a part of a larger device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication apparatus may be a chip or a chip system, reference is made to FIG. 12, which is a structural diagram of a chip provided in an embodiment of the present invention.

A chip 1100 includes a processor 1101 and an interface 1103. In the chip, one or more processors 1101 may be provided, and more than one interface 1103 may be provided.

For the case where the chip is configured to realize the function of the first terminal in embodiments of the present invention: the interface 1103 is configured to receive code instructions and transmit the code instructions to the processor; and the processor 1101 is configured to execute the code instructions to perform the method for acquiring a CSI report as described in some embodiments above.

For the case where the chip is configured to realize the function of the second terminal in embodiments of the present invention, the interface 1103 is configured to receive code instructions and transmit the code instructions to the processor; and the processor 1101 is configured to execute the code instructions to perform the method for acquiring a CSI report as described in some embodiments above.

For the case where the chip is configured to realize the function of the network side device in embodiments of the present invention, the interface 1103 is configured to receive code instructions and transmit the code instructions to the processor; and the processor 1101 is configured to execute the code instructions to perform the method for acquiring a CSI report as described in some embodiments above.

Optionally, the chip 1100 further includes a memory 1102 configured to store necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

Embodiments of the present invention also provide a system for information transmission, the system includes an apparatus for acquiring a CSI report as the first terminal and an apparatus for acquiring a CSI report as the second terminal in the previously embodiment described with reference to FIG. 10, or the system includes a communication apparatus as the first terminal and a communication apparatus as the second terminal in the previously embodiment described with reference to FIG. 11.

The present invention also provides a readable storage medium having stored therein instructions, that when executed by a computer, cause the functions of any of the method embodiments described above to be implemented.

The present invention also provides a computer program product that, when executed by a computer, causes the functions of any of the method embodiments described above to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific embodiments of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for acquiring a channel state information (CSI) report, performed by a first terminal, comprising:
receiving a CSI report request sent by a second terminal based on a unicast connection;
receiving configuration information sent by the second terminal;
determining a target frequency band in a plurality of frequency bands; and
sending a CSI report of the target frequency band to the second terminal.

2. The method of claim 1, wherein the configuration information indicates a first frequency band; and wherein determining the target frequency band comprises:
determining the target frequency band to be the first frequency band according to the configuration information.

3. The method of claim 1, wherein the CSI report request indicates a second frequency band; and wherein determining the target frequency band comprises:
determining the target frequency band to be the second frequency band according to the CSI report request.

4. The method of claim 1, wherein the second terminal sends the CSI report request on a third frequency band; and wherein determining the target frequency band comprises:
determining the target frequency band to be the third frequency band according to the CSI report request.

5. The method of claim 1, wherein the configuration information comprises a list of frequency bands comprising at least one frequency band, and the CSI report request indicates a first index identification indicating a first position in the list of frequency bands; and
wherein determining the target frequency band comprises:
determining a fourth frequency band located at the first position in the list of frequency bands according to the first index identification; and
determining the target frequency band to be the fourth frequency band.

6. The method of any one of claims 1 to 5, further comprising:
starting a CSI report timer.

7. The method of claim 6, wherein the configuration information comprises a report delay corresponding to the target frequency band; and the method further comprises:
cancelling sending the CSI report of the target frequency band to the second terminal, in response to the CSI report timer expiring; wherein a timing time of the CSI report timer is the report delay.

8. The method of claim 6 or 7, wherein the configuration information comprises a report delay corresponding to the target frequency band; and the method further comprises:
stopping a countdown of the CSI report timer, in response to sending the generated CSI report corresponding to the target frequency band to the second terminal and the CSI report timer not expiring; wherein a timing time of the CSI report timer is the report delay.

9. The method of any one of claims 1 to 8, wherein the CSI report indicates a channel quality indicator (CQI) of the target frequency band and a frequency band identification; and wherein the frequency band identification is used to determine the target frequency band corresponding to the CSI report.

10. The method of claim 9, wherein in a case where the configuration information comprises a list of frequency bands comprising at least one frequency band, the frequency band identification is a second index identification indicating a second position in the list of frequency bands, wherein a fifth frequency band located at the second specific position in the list of frequency bands indicated by the second index identification is the target frequency band corresponding to the CSI report.

11. The method of claim 9 or 10, wherein the CSI report has a sidelink channel state information reporting medium access control control element (sidelink CSI reporting MAC CE) structure, and the sidelink CSI reporting MAC CE structure comprises a reserved bit for carrying the frequency band identification.

12. The method of claim 11, wherein the sidelink CSI reporting MAC CE structure comprises a plurality of portions corresponding to a plurality of target frequency bands, respectively.

13. A method for acquiring a channel state information (CSI) report, performed by a second terminal, comprising:
sending a CSI report request to a first terminal based on a unicast connection;
sending configuration information to the second terminal; and
receiving a CSI report of a target frequency band sent by the second terminal; wherein the target frequency band is determined by the second terminal from a plurality of frequency bands.

14. The method of claim 13, wherein the configuration information indicates a first frequency band.

15. The method of claim 13, wherein the CSI report request indicates a second frequency band.

16. The method of claim 13, wherein sending the CSI report request to the first terminal based on the unicast connection comprises:
sending the CSI report request to the first terminal based on the unicast connection on a third frequency band.

17. The method of claim 13, wherein the configuration information comprises a list of frequency bands, and the list of frequency bands comprises at least one frequency band.

18. The method of claim 17, wherein the configuration information further comprises a report delay corresponding to a frequency band in the list of frequency bands.

19. The method of claim 17 or 18, wherein the CSI report request indicates a first index identification indicating a first position in the list of frequency bands.

20. The method of any one of claims 13 to 19, wherein the CSI report indicates a channel quality indicator (CQI) of the target frequency band and a frequency band identification; and wherein the frequency band identification is used to determine the target frequency band corresponding to the CSI report.

21. The method of claim 20, wherein in a case where the configuration information comprises a list of frequency bands comprising at least one frequency band, the frequency band identification is a second index identification indicating a second position in the list of frequency bands, wherein a fifth frequency band located at the second position in the list of frequency bands indicated by the second index identification is the target frequency band corresponding to the CSI report.

22. The method of claim 20 or 21, wherein the CSI report has a sidelink CSI reporting MAC CE structure, and the sidelink CSI reporting MAC CE structure comprises a reserved bit for carrying the frequency band identification.

23. The method of claim 22, wherein the sidelink CSI reporting MAC CE structure comprises a plurality of portions corresponding to a plurality of target frequency bands, respectively.

24. A communication apparatus, comprising:
a receiving module configured to: receive a CSI report request sent by a second terminal based on a unicast connection, and receive configuration information sent by the second terminal;
a processing module configured to determine a target frequency band in a plurality of frequency bands; and
a sending module configured to send a CSI report of the target frequency band to the second terminal.

25. A communication apparatus, comprising:
a sending module configured to: send a CSI report request to a first terminal based on a unicast connection, and send configuration information to the second terminal; and
a receiving module configured to receive a CSI report of a target frequency band sent by the second terminal; wherein the target frequency band is determined by the second terminal from a plurality of frequency bands.

26. A communication apparatus, comprising a processor and a memory having a computer program stored therein, wherein the processor is configured to execute the computer program stored in the memory to cause the apparatus to perform the method of any one of claims 1 to 23.

27. A communication apparatus, comprising a processor and an interface circuit; wherein
the interface circuit is configured to receive code instructions and transmit the code instructions to the processor; and
the processor is configured to run the code instructions to perform the method of any one of claims 1 to 23.

28. A computer readable storage medium having stored therein instructions that, when executed, cause the method of any one of claims 1 to 23 to be implemented.
